(19) **Europäisches Patentamt / European Patent Office / Office européen des brevets**

(11) **EP 3 796 337 A1**

(12) # EUROPEAN PATENT APPLICATION
published in accordance with Art. 153(4) EPC

(43) Date of publication:
**24.03.2021 Bulletin 2021/12**

(21) Application number: **19803172.6**

(22) Date of filing: **13.05.2019**

(51) Int Cl.:
**H01B 1/06** (2006.01)     **H01M 10/052** (2010.01)
**H01M 10/0562** (2010.01)     **H01M 10/0568** (2010.01)

(86) International application number:
**PCT/JP2019/018869**

(87) International publication number:
**WO 2019/221042 (21.11.2019 Gazette 2019/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.05.2018   JP 2018094291**
             **24.01.2019   JP 2019009929**

(71) Applicant: **NGK Spark Plug Co., Ltd.**
**Nagoya-shi, Aichi 467-8525 (JP)**

(72) Inventors:
• **SHISHIHARA Daisuke**
  **Nagoya-shi, Aichi 467-8525 (JP)**
• **TAKEUCHI Yuki**
  **Nagoya-shi, Aichi 467-8525 (JP)**
• **KONDO Ayako**
  **Nagoya-shi, Aichi 467-8525 (JP)**
• **HIKOSAKA Hideaki**
  **Nagoya-shi, Aichi 467-8525 (JP)**
• **MIZUTANI Hidetoshi**
  **Nagoya-shi, Aichi 467-8525 (JP)**

(74) Representative: **Zimmermann & Partner**
**Patentanwälte mbB**
**Postfach 330 920**
**80069 München (DE)**

(54) **IONIC CONDUCTOR AND LITHIUM BATTERY**

(57)     Provided is an ionic conductor that, as a molded article that has been press-molded without firing, can exhibit a high lithium ionic conductivity. The ionic conductor comprises an ionic conductive powder that has a garnet structure or garnet-like structure containing at least Li, La, Zr, and O. This ionic conductor further comprises an ionic liquid that exhibits lithium ion conductivity. The ionic conductor has a lithium ion conductivity at 25°C of at least $1.0 \times 10^{-5}$ S/cm.

*FIG. 1*

EP 3 796 337 A1

## Description

TECHNICAL FIELD

The technique disclosed in the present specification relates to an ion conductor.

BACKGROUND ART

In recent years, an increasing demand has arisen for high-performance batteries in association with, for example, the prevalence of electronic apparatuses (e.g., personal computers and cellular phones) and electric-powered automobiles, and the growing use of natural energy such as sunlight or wind power. In particular, expectations are placed on the utilization of a complete-solid lithium ion secondary battery in which all battery elements are formed of a solid (hereinafter the battery may be referred to as a "complete-solid battery"). The complete-solid battery is free from, for example, leakage of an organic electrolytic solution or flashing, and thus is safer than a conventional lithium ion secondary battery containing an organic electrolytic solution prepared by dissolution of a lithium salt in an organic solvent. Since the complete-solid battery can be provided with a simple casing, the battery achieves an increase in energy density per unit mass or unit volume.

A known ion conductor forming a solid electrolyte layer or an electrode of such a complete-solid battery contains, for example, an ion conductive powder containing at least Li (lithium), La (lanthanum), Zr (zirconium), and O (oxygen) and having a garnet-type structure or a garnet-like structure. A known ion conductive powder contained in such an ion conductor is, for example, a powder of $Li_7La_3Zr_2O_{12}$ (hereinafter will be referred to as "LLZ") or a powder of a product prepared by substitution of LLZ with at least one element of Mg (magnesium) and A (wherein A represents at least one element selected from the group consisting of Ca (calcium), Sr (strontium), and Ba (barium)) (e.g., a product prepared by substitution of LLZ with elemental Mg and Sr (hereinafter the product will be referred to as "LLZ-MgSr")) (see, for example, Patent Document 1). Hereinafter, such an ion conductive powder will be referred to as "LLZ ion conductive powder."

PRIOR ART DOCUMENT

PATENT DOCUMENT

Patent Document 1: Japanese Patent Application Laid-Open *(kokai)* No. 2016-40767

SUMMARY OF THE INVENTION

PROBLEM TO BE SOLVED BY THE INVENTION

An LLZ ion conductive powder exhibits relatively low lithium ion conductivity in the form of a molded product (compact) formed by press molding of the powder, since particles are in point contact with one another, and thus the electric resistance between particles is high. The lithium ion conductivity can be increased by firing the LLZ ion conductive powder at a high temperature. However, since high-temperature firing of the powder causes warpage or deformation, difficulty is encountered in producing a large-size battery. Also, high-temperature firing of the powder may cause reaction of the powder with, for example, an electrode active material to form a layer of high resistance, leading to a reduction in lithium ion conductivity.

Such a problem is not limited to an ion conductor used in a solid electrolyte layer or an electrode of a complete-solid battery, but is common with an ion conductor having lithium ion conductivity.

The present specification discloses a technique capable of solving the aforementioned problems.

MEANS FOR SOLVING THE PROBLEM

The technique disclosed in the present specification can be implemented in, for example, the following modes.

(1) The present specification discloses an ion conductor comprising an ion conductive powder containing at least Li, La, Zr, and O and having a garnet-type structure or a garnet-like structure, wherein the ion conductor further comprises an ionic liquid having lithium ion conductivity, and exhibits a lithium ion conductivity of $1.0 \times 10^{-5}$ S/cm or more at 25°C. The ion conductor contains the ionic liquid having lithium ion conductivity in addition to the ion conductive powder (LLZ ion conductive powder) containing at least Li, La, Zr, and O and having a garnet-type structure or a garnet-like structure. Therefore, when the ion conductor is formed into a compact by press molding (without high-temperature firing), the ionic liquid is present at particle boundaries of the LLZ ion conductive powder, and thus lithium ion conductivity is improved at the particle boundaries, resulting in achievement of a level of high lithium ion conductivity of $1.0 \times 10^{-5}$ S/cm or more.

(2) In the ion conductor, the amounts of the ion conductive powder and the ionic liquid may satisfy the following volume ratio (vol%) condition: the ion conductive powder : the ionic liquid = (100 - X) : X (wherein 0<X≤16). The ion conductor can prevent seeping of the ionic liquid caused by an excessive increase in the amount of the ionic liquid. Also, the presence of the ionic liquid can improve lithium ion conductivity at particle boundaries of the LLZ ion conductive powder, resulting in an improvement in the lithium ion conductivity of the ion conductor.

(3) In the ion conductor, the amount of the ionic liquid may be 95% or more at a cut surface of the ion conductor as determined by XPS analysis. According to the ion conductor, the ionic liquid is sufficiently present at particle boundaries of the LLZ ion conductive powder. The presence of the ionic liquid can effectively improve lithium ion conductivity at particle boundaries of the LLZ ion conductive powder, resulting in an effective improvement in the lithium ion conductivity of the ion conductor.

(4) The ion conductor may further comprise a binder, wherein the sum of the amounts of the ion conductive powder and the ionic liquid and the amount of the binder may satisfy the following volume ratio (vol%) condition: (the ion conductive powder + the ionic liquid) : the binder = (100 - Y) : Y (wherein $0 < Y \leq 6.5$). In this case, formability of the ion conductor can be improved, and a reduction in lithium ion conductivity, which is due to the presence of the binder, can be prevented.

(5) The ion conductor may further comprise a binder, wherein the amounts of the ion conductive powder and the ionic liquid may satisfy the following volume ratio (vol%) condition: the ion conductive powder : the ionic liquid = (100 - X) : X (wherein $7 \leq X \leq 16$), and the sum of the amounts of the ion conductive powder and the ionic liquid and the amount of the binder may satisfy the following volume ratio (vol%) condition: (the ion conductive powder + the ionic liquid) : the binder = (100 - Y) : Y (wherein $0 < Y \leq 11.5$). In this case, formability of the ion conductor can be improved, and a reduction in lithium ion conductivity, which is due to the presence of the binder, can be prevented.

(6) The present specification also discloses a lithium battery comprising a solid electrolyte layer, a cathode, and an anode, wherein at least one of the solid electrolyte layer, the cathode, and the anode contains the ion conductor described above. According to the lithium battery, the lithium ion conductivity of at least one of the solid electrolyte layer, the cathode, and the anode can be improved. Thus, the electric performance of the lithium battery can be improved.

The technique disclosed in the present specification can be implemented in various modes; for example, an ion conductor, a lithium battery containing the ion conductor, and a production method therefor.

BRIEF DESCRIPTION OF THE DRAWINGS

[FIG. 1] Explanatory view schematically showing a cross section of a complete-solid lithium ion secondary battery 102 according to the present embodiment.

[FIG. 2] Table showing the results of first performance evaluation.

[FIG. 3] Graph showing the results of the first performance evaluation.

[FIG. 4] Table showing the results of second performance evaluation.

[FIG. 5] Graph view showing the results of the second performance evaluation.

MODES FOR CARRYING OUT THE INVENTION

A. Embodiment:

A-1. Structure of complete-solid battery 102:

(Entire structure)

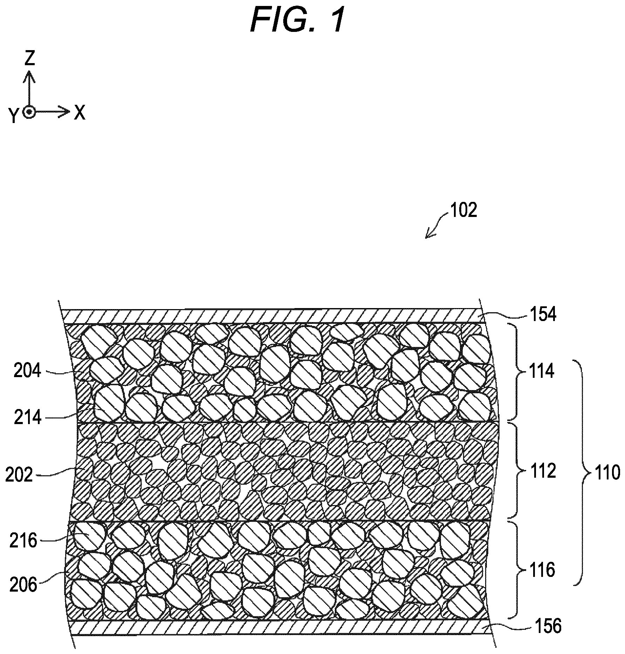

FIG. 1 is an explanatory view schematically showing a cross section of a complete-solid lithium ion secondary battery (hereinafter will be referred to as "complete-solid battery") 102 according to the present embodiment. FIG. 1 shows mutually orthogonal X-axis, Y-axis, and Z-axis for specifying respective directions. In the present specification, for the sake of convenience, the positive Z-axis direction is called the "upward direction," and the negative Z-axis direction is called the "downward direction."

The complete-solid battery 102 includes a battery body 110, a cathode-side collector member 154 disposed on one side (upper side) of the battery body 110, and an anode-side collector member 156 disposed on the other side (lower side) of the battery body 110. Each of the cathode-side collector member 154 and the anode-side collector member 156 is an electrically conductive member having an approximately flat-plate shape, and is formed of, for example, an electrically conductive metal material selected from among stainless steel, Ni (nickel), Ti (titanium), Fe (iron), Cu (copper), Al (aluminum), and alloys of these, or a carbon material. In the following description, the cathode-side collector member 154 and the anode-side collector member 156 may be collectively referred to as "collector members."

(Structure of battery body 110)

The battery body 110 is a lithium ion secondary battery body in which all battery elements are formed of a solid. As used herein, the phrase "all battery elements are formed of a solid" refers to the case where the skeletons of all battery elements are formed of a solid, but does not exclude the case where, for example, any of the skeletons is impregnated with a liquid. The battery body 110 includes a cathode 114, an anode 116, and a solid electrolyte layer 112 disposed between the cathode 114 and the anode 116. In the following description, the cathode 114 and the anode 116 may be collectively referred to as "electrodes." The battery body 110 corresponds to the lithium battery appearing in CLAIMS.

(Structure of solid electrolyte layer 112)

The solid electrolyte layer 112 is a member having an approximately flat-plate shape and contains a lithium ion conductor 202 which is a solid electrolyte. The structure of the lithium ion conductor 202 contained in the solid electrolyte layer 112 will be described in detail below.

(Structure of cathode 114)

The cathode 114 is a member having an approximately flat-plate shape and contains a cathode active material 214. The cathode active material 214 is, for example, S (sulfur), $TiS_2$, $LiCoO_2$, $LiMn_2O_4$, or $LiFePO_4$. The cathode 114 contains a lithium ion conductor 204 which is a solid electrolyte serving as a lithium-ion-conducting aid. The cathode 114 may further contain an electron-conducting aid (e.g., electrically conductive carbon, Ni (nickel), Pt (platinum), or Ag (silver)).

(Structure of anode 116)

The anode 116 is a member having an approximately flat-plate shape and contains an anode active material 216. The anode active material 216 is, for example, Li metal, Li-Al alloy, $Li_4Ti_5O_{12}$, carbon, Si (silicon), or SiO. The anode 116 contains a lithium ion conductor 206 which is a solid electrolyte serving as a lithium-ion-conducting aid. The cathode 116 may further contain an electron-conducting aid (e.g., electrically conductive carbon, Ni, Pt, or Ag).

A-2. Structure of lithium ion conductor:

Next will be described the structure of the lithium ion conductor 202 contained in the solid electrolyte layer 112. The lithium ion conductor 204 contained in the cathode 114 and the lithium ion conductor 206 contained in the anode 116 have the same structure as the lithium ion conductor 202 contained in the solid electrolyte layer 112. Thus, description of the conductors 204 and 206 is omitted.

In the present embodiment, the lithium ion conductor 202 contained in the solid electrolyte layer 112 contains an ion conductive powder containing at least Li, La, Zr, and O and having a garnet-type structure or a garnet-like structure. The ion conductive powder contained in such an ion conductor is, for example, a powder of $Li_7La_3Zr_2O_{12}$ (hereinafter will be referred to as "LLZ") or a powder of a product prepared by substitution of LLZ with at least one element of Mg and A (wherein A represents at least one element selected from the group consisting of Ca, Sr, and Ba) (e.g., a product prepared by substitution of LLZ with elemental Mg and Sr (hereinafter the product will be referred to as "LLZ-MgSr")). Hereinafter, the ion conductive powder containing at least Li, La, Zr, and O and having a garnet-type structure or a garnet-like structure will be referred to as "LLZ ion conductive powder."

In the present embodiment, the lithium ion conductor 202 further contains an ionic liquid having lithium ion conductivity. The ionic liquid having lithium ion conductivity is, for example, an ionic liquid containing a lithium salt dissolved therein. The ionic liquid contains only cationic and anionic moieties, and is in the form of liquid at ambient temperature.

Examples of the aforementioned lithium salt include lithium tetrafluoroborate ($LiBF_4$), lithium hexafluorophosphate ($LiPF_6$), lithium perchlorate ($LiClO_4$), lithium trifluoromethanesulfonate ($Li(CF_3SO_3)$), lithium bis(trifluoromethanesulfonyl)imide ($LiN(CF_3SO_2)_2$) (hereinafter referred to as "Li-TFSI"), and lithium bis (pentafluoroethanesulfonyl) imide ($LiN (C_2F_5SO_2)_2$).

The aforementioned ionic liquid includes a cation selected from, for example, the following cations:

ammonium cations such as butyltrimethylammonium and trimethylpropylammonium;

imidazolium cations such as 1-ethyl-3-methylimidazolium and 1-butyl-3-methylimidazolium;

piperidinium cations such as 1-butyl-1-methylpiperidinium and 1-methyl-1-propylpiperidinium;

pyridinium cations such as 1-butyl-4-methylpyridinium and 1-ethylpyridinium;

pyrrolidinium cations such as 1-butyl-1-methylpyrrolidinium and 1-methyl-1-propylpyrrolidinium;

sulfonium cations such as trimethylsulfonium and triethylsulfonium;

phosphonium cations; and

morpholinium cations.

The aforementioned ionic liquid includes an anion selected from, for example, the following anions:

halide anions such as Cl$^-$ and Br$^-$;

borate anions such as $BF_4^-$;

amine anions such as $(NC)_2N^-$, $(CF_3SO_2)_2N^-$, and $(FSO_2)_2N^-$;

sulfate and sulfonate anions such as $CH_3SO_4^-$ and $CF_3SO_3^-$; and

phosphate anions such as $PF_6^-$.

More specifically, the aforementioned ionic liquid includes, for example, butyltrimethylammonium bis(trifluoromethanesulfonyl)imide, trimethylpropylammonium bis(trifluoromethanesulfonyl)imide, 1-ethyl-3-methylimidazolium bis(fluorosulfonyl)imide (hereinafter referred to as "EMI-FSI"), 1-ethyl-3-methylimidazolium tetrafluoroborate, 1-methyl-1-propylpyrrolidinium bis(trifluoromethanesulfonyl)imide, or 1-ethyl-3-methylimidazolium bis(trifluoromethanesulfonyl)imide.

The lithium ion conductor 202 of the present embodiment is not a sintered body formed by high-temperature firing. Thus, the lithium ion conductor 202 of the present embodiment contains hydrocarbons. More specifically, the ionic liquid forming the lithium ion conductor 202 of the present embodiment contains hydrocarbons. The presence of hydrocarbons contained in the lithium ion conductor 202 (ionic liquid) can be determined by one technique selected from, for example, NMR (nuclear magnetic resonance), GC-MS (gas chromatography-mass spectrometry), and FT-IR (Fourier-transform infrared spectroscopy) or a combination of two or more of these techniques.

As described above, the lithium ion conductor 202 of the present embodiment contains, in addition to the LLZ ion conductive powder, the ionic liquid having lithium ion conductivity. The lithium ion conductor 202 exhibits high lithium ion conductivity (specifically, a lithium ion conductivity of $1.0 \times 10^{-5}$ S/cm or more at 25°C) in the form of a compact formed by press molding. The reason why the lithium ion conductor 202 of the present embodiment exhibits such a high lithium ion conductivity has not clearly been elucidated, but is considered as follows.

The LLZ ion conductive powder is harder than another oxide-based lithium ion conductor or a non-oxide-based lithium ion conductor (e.g., a sulfide-based lithium ion conductor). Thus, when the LLZ ion conductive powder is formed into a molded product (compact) by press molding, the compact exhibits relatively low lithium ion conductivity, since particles are in point contact with one another, and the resistance between particles is high. Although the lithium ion conductivity can be increased by firing the LLZ ion conductive powder at a high temperature, difficulty is encountered in producing a large-size battery since high-temperature firing of the powder causes warpage or deformation. Also, high-temperature firing of the powder may cause reaction of the powder with, for example, an electrode active material to form a layer of high resistance, leading to a reduction in lithium ion conductivity. However, the lithium ion conductor 202 of the present embodiment contains the ionic liquid having lithium ion conductivity in addition to the LLZ ion conductive powder. Therefore, when the lithium ion conductor is formed into a compact by press molding, the ionic liquid is present at particle boundaries of the LLZ ion conductive powder, and thus lithium ion conductivity is improved at the particle boundaries, which conceivably results in an improvement in the lithium ion conductivity of the lithium ion conductor 202.

In the lithium ion conductor 202 of the present embodiment, the amounts of the LLZ ion conductive powder and the ionic liquid preferably satisfy the following volume ratio (vol%) condition: the LLZ ion conductive powder : the ionic liquid = (100 - X) : X (wherein 0<X≤16). In such a case, the lithium ion conductor can prevent seeping of the ionic liquid caused by an excessive increase in the amount of the ionic liquid. Also, the presence of the ionic liquid can improve lithium ion conductivity at particle boundaries of the LLZ ion conductive powder, resulting in an improvement in the lithium ion conductivity of the lithium ion conductor 202.

The amount of the ionic liquid is preferably 95% or more at a cut surface of the lithium ion conductor 202 of the present embodiment as determined by XPS analysis. The state where the amount of the ionic liquid is very large (i.e., 95% or more) at a cut surface of the lithium ion conductor 202 is probably attributed to the fact that the ionic liquid is sufficiently present at particle boundaries of the LLZ ion conductive powder before cutting, and the surface of the LLZ ion conductive powder is covered with the ionic liquid at the moment when the cut surface is formed. Therefore, according to the lithium ion conductor 202, the presence of the ionic liquid can effectively improve lithium ion conductivity at particle boundaries of the LLZ ion conductive powder, resulting in an effective improvement in the lithium ion conductivity of the lithium ion conductor 202.

The lithium ion conductor 202 of the present embodiment may contain a binder in addition to the LLZ ion conductive powder and the ionic liquid. Incorporation of a binder into the lithium ion conductor 202 can improve the formability thereof. Examples of the binder include polyvinylidene fluoride (PVDF), a copolymer of polyvinylidene fluoride (PVDF) and hexafluoropropylene (HFP) (hereinafter the copolymer will be referred to as "PVDF-HFP"), polytetrafluoroethylene (PTFE), polyimide, polyamide, silicone (polysiloxane), styrene-butadiene rubber (SBR), acrylic resin (PMMA), and polyethylene oxide (PEO).

When the lithium ion conductor 202 contains a binder, the sum of the amounts of the LLZ ion conductive powder and the ionic liquid and the amount of the binder in the lithium ion conductor 202 preferably satisfy the following volume ratio (vol%) condition: (the LLZ ion conductive powder + the ionic liquid) : the binder = (100 - Y) : Y (wherein 0<Y≤6.5). When the lithium ion conductor 202 contains a binder, formability of the ion conductor can be improved, but the lithium ion conductor 202 may exhibit low lithium ion conductivity due to the presence of the binder. However, according to the aforementioned volume ratio condition, formability of the lithium ion conductor 202 can be improved, and a reduction in lithium ion conductivity, which is due to the presence of the binder, can be prevented.

When the lithium ion conductor 202 contains a binder, the amounts of the LLZ ion conductive powder and the ionic liquid in the lithium ion conductor 202 preferably satisfy the following volume ratio (vol%) condition: the LLZ ion conductive powder : the ionic liquid = (100 - X) : X (wherein 7≤X≤16), and the sum of the amounts of the LLZ ion conductive powder and the ionic liquid and the amount of the binder in the lithium ion conductor 202 preferably satisfy the following volume ratio (vol%) condition: (the LLZ ion conductive powder + the ionic liquid) : the binder = (100 - Y) : Y (wherein 0<Y≤11.5). According to the aforementioned volume ratio condition, formability of the lithium ion conductor 202 can be improved, and a reduction in lithium ion conductivity, which is due to the presence of the binder, can be prevented.

The composition of the lithium ion conductor 202 (i.e., the proportions (vol%) of the LLZ ion conductive powder, the ionic liquid, and the binder (if contained)) can be determined as described below. Specifically, the target (e.g., the solid electrolyte layer 112 formed of the lithium ion conductor 202) is frozen with, for example, liquid nitrogen, or embedded and solidified in a resin (e.g., tetrafunctional epoxy resin), so as to fix the materials of the target. Thereafter, the resultant target is cut, and a cut surface is exposed. The cut surface is polished, and randomly selected visual fields (magnification: 5,000) of the polished surface are analyzed by means of an energy dispersive X-ray spectrometer (EDS) of a scanning electron microscope (SEM), to thereby determine the distribution of the elements contained in the LLZ ion conductive powder (e.g., La and Zr when the powder is formed of LLZ-MgSr), the element contained in the ionic liquid (e.g., S when the ionic liquid contains EMI-FSI), and the element contained in the binder (e.g., F when the binder is PVDF), or to perform image analysis of backscattered electron image contrast. Thus, the area proportions of the LLZ ion conductive powder, the ionic liquid, and the binder (if contained) are determined. The resultant area proportions are regarded as the volume ratio of the LLZ ion conductive powder, the ionic liquid, and the binder (if contained), to thereby determine their volume ratios.

A-3. Production method for complete-solid battery 102:

Next will be described an exemplary production method for the complete-solid battery 102 of the present embodiment. Firstly, the solid electrolyte layer 112 is formed. Specifically, an LLZ lithium ion conductive powder and an ionic liquid having lithium ion conductivity are provided, and they are mixed in predetermined proportions to thereby prepare a powder mixture. The powder mixture is press-molded at a predetermined pressure. Alternatively, the powder mixture is formed into a sheet by use of a binder, and then the sheet is press-molded at a predetermined pressure. This process produces the solid electrolyte layer 112 from the lithium ion conductor 202 containing the LLZ lithium ion conductive powder and the ionic liquid having lithium ion conductivity.

Subsequently, the cathode 114 and the anode 116 are formed. Specifically, a powder of the cathode active material 214, the aforementioned powder mixture, and optionally an electron-conducting aid powder, a binder, and an organic solvent are mixed in predetermined proportions, and the resultant mixture is subjected to molding, to thereby form the cathode 114. Separately, a powder of the anode active material 216, the aforementioned powder mixture, and optionally an electron-conducting aid powder, a binder, and an organic solvent are mixed together, and the resultant mixture is subjected to molding, to thereby form the anode 116.

Thereafter, the cathode-side collector member 154, the cathode 114, the solid electrolyte layer 112, the anode 116, and the anode-side collector member 156 are stacked in this order, and then integrated together by pressing. The complete-solid battery 102 having the aforementioned structure is produced through the above-described process.

A-4. Preferred embodiment of LLZ ion conductive powder:

As described above, the lithium ion conductor of the present embodiment contains an LLZ ion conductive powder (ion conductive powder containing at least Li, La, Zr, and O and having a garnet-type structure or a garnet-like structure). The LLZ ion conductive powder preferably contains at least one element selected from the group consisting of Mg, Al, Si, Ca (calcium), Ti, V (vanadium), Ga (gallium), Sr, Y (yttrium), Nb (niobium), Sn (tin), Sb (antimony), Ba (barium), Hf (hafnium), Ta (tantalum), W (tungsten), Bi (bismuth), and lanthanoids. The LLZ ion conductive powder having such a composition exhibits good lithium ion conductivity.

Preferably, the LLZ ion conductive powder contains at least one of Mg and element A (wherein A represents at least one element selected from the group consisting of Ca, Sr, and Ba), wherein these elements satisfy the following mole ratio conditions (1) to (3). Mg and element A are present in relatively large amounts in the earth and inexpensive. Thus, when Mg and/or element A is used as a substitution element for the LLZ ion conductive powder, the LLZ ion conductive powder is expected to be reliably supplied and produced at low cost.

(1)

$$1.33 \leq Li/(La + A) \leq 3;$$

(2)

$$0 \leq Mg/(La + A) \leq 0.5;$$

and

(3)

$$0 \leq A/(La + A) \leq 0.67.$$

More preferably, the LLZ ion conductive powder contains both Mg and element A, wherein these elements satisfy the following mole ratio conditions (1') to (3'):

(1')

$$2.0 \leq Li/(La + A) \leq 2.5;$$

(2')

$$0.01 \leq Mg/(La + A) \leq 0.14;$$

and

(3')

$$0.04 \leq A/(La + A) \leq 0.17.$$

In other words, the LLZ ion conductive powder preferably satisfies any of the following (a) to (c), more preferably (c), still more preferably (d).

(a) The LLZ ion conductive powder contains Mg, wherein the amounts of the elements satisfy the mole ratio conditions: $1.33 \leq Li/La \leq 3$ and $0 \leq Mg/La \leq 0.5$.

(b) The LLZ ion conductive powder contains element A, wherein the amounts of the elements satisfy the mole ratio conditions: $1.33 \leq Li/(La + A) \leq 3$ and $0 \leq A/(La + A) \leq 0.67$.

(c) The LLZ ion conductive powder contains Mg and element A, wherein the amounts of the elements satisfy the mole ratio conditions: $1.33 \leq Li/(La + A) \leq 3$, $0 \leq Mg/(La + A) \leq 0.5$, and $0 \leq A/(La + A) \leq 0.67$.

(d) The LLZ ion conductive powder contains Mg and element A, wherein the amounts of the elements satisfy the mole ratio conditions: $2.0 \leq Li/(La + A) \leq 2.5$, $0.01 \leq Mg/(La + A) \leq 0.14$, and $0.04 \leq A/(La + A) \leq 0.17$.

When the LLZ ion conductive powder satisfies the aforementioned (a); i.e., when the LLZ ion conductive powder contains Li, La, Zr, and Mg so as to satisfy the aforementioned mole ratio conditions: (1) and (2), the LLZ ion conductive powder exhibits good lithium ion conductivity. Although the mechanism therefor has not clearly been elucidated, a conceivable reason is as follows. In the case where, for example, the LLZ ion conductive powder contains Mg, the ionic radius of Li is almost equivalent to that of Mg, and thus Mg is readily placed in Li sites where Li is originally present in the LLZ crystal phases. When Mg replaces Li, pore are generated at some Li sites in the crystal structure, due to the difference in amount of electric charge between Li and Mg, thereby conceivably enhancing the mobility of Li ions. As a result, lithium ion conductivity may be improved. In the LLZ ion conductive powder, when the mole ratio of Li to the sum of La and element A is smaller than 1.33 or greater than 3, a metal oxide other than the ion conductive powder having a garnet-type or garnet-like crystal structure is readily formed. An increase in the metal oxide content leads to a relative decrease in the amount of the ion conductive powder having a garnet-type or garnet-like crystal structure. Since the metal oxide has low lithium ion conductivity, the lithium ion conductivity of the LLZ ion conductive powder is reduced. An increase in the Mg content of the LLZ ion conductive powder leads to placement of Mg in Li sites and generation of pores at some Li sites, resulting in an improvement in lithium ion conductivity. When the mole ratio of Mg to the sum of La and element A is in excess of 0.5, an Mg-containing metal oxide is readily formed. An increase in the Mg-containing metal oxide content leads to a relative decrease in the amount of the ion conductive powder having a garnet-type or garnet-like crystal structure. The Mg-containing metal oxide has low lithium ion conductivity. Thus, when the mole ratio of Mg to the sum of La and element A is in excess of 0.5, the lithium ion conductivity of the LLZ ion conductive powder is reduced.

When the LLZ ion conductive powder satisfies the aforementioned (b); i.e., when the LLZ ion conductive powder contains Li, La, Zr, and element A so as to satisfy the mole ratio conditions (1) and (3), the LLZ ion conductive powder exhibits good lithium ion conductivity. Although the mechanism therefor has not clearly been elucidated, a conceivable reason is as follows. In the case where, for example, the LLZ ion conductive powder contains element A, the ionic radius of La is almost equivalent to that of element A, and thus element A is readily placed in La sites where La is originally present in the LLZ crystal phases. When element A replaces La, the crystal lattice deforms, and free Li ions increase due to the difference in amount of electric charge between La and element A, thereby conceivably improving lithium ion conductivity. In the LLZ ion conductive powder, when the mole ratio of Li to the sum of La and element A is smaller than 1.33 or greater than 3, a metal oxide other than the ion conductive powder having a garnet-type or garnet-like crystal structure is readily formed. An increase in the metal oxide content leads to a relative decrease in the amount of the ion conductive powder having a garnet-type or garnet-like crystal structure. Since the metal oxide has low lithium ion conductivity, the lithium ion conductivity of the LLZ ion conductive powder is reduced. An increase in the element A content of the LLZ ion conductive powder leads to placement of element A in La sites. As a result, the lattice deformation increases, and free Li ions increase due to the difference in amount of electric charge between La and element A, thereby improving lithium ion conductivity. When the mole ratio of element A to the sum of La and element A is in excess of 0.67, an element A-containing metal oxide is readily formed. An increase in the element A-containing metal oxide content leads to a relative decrease in the amount of the ion conductive powder having a garnet-type or garnet-like crystal structure. Since the element A-containing metal oxide has low lithium ion conductivity, the lithium ion conductivity of the LLZ ion conductive powder is reduced.

The aforementioned element A is at least one element selected from the group consisting of Ca, Sr, and Ba. Ca, Sr, and Ba are group 2 elements defined in the relevant periodic table, and readily form divalent cations. These elements have almost the same ionic radius. Since the ionic radius of each of Ca, Sr, and Ba is almost the same as that of La, La elements present in the La sites of the LLZ ion conductive powder are readily substituted with Ca, Sr, or Ba. Among these elements A, Sr is preferred, since the LLZ ion conductive powder containing Sr can be readily formed through sintering, to thereby achieve high lithium ion conductivity.

When the LLZ ion conductive powder satisfies the aforementioned (c); i.e., when the LLZ ion conductive powder contains Li, La, Zr, Mg, and element A so as to satisfy the mole ratio conditions (1) to (3), the ion conductive powder can be readily formed through sintering, to thereby achieve further improved lithium ion conductivity. When the LLZ ion conductive powder satisfies the aforementioned (d); i.e., when the LLZ ion conductive powder contains Li, La, Zr, Mg, and element A so as to satisfy the mole ratio conditions (1') to (3'), the lithium ion conductivity is further improved. Although the mechanism therefor has not clearly been elucidated, a conceivable reason is as follows. In the LLZ ion conductive powder, when, for example, Li in Li sites is substituted by Mg, and La in La sites is substituted by element A, pores are generated at some Li sites, and free Li ions increase. As a result, the lithium ion conductivity may be further improved. More preferably, the LLZ ion conductive powder contains Li, La, Zr, Mg, and Sr so as to satisfy the aforementioned conditions (1) to (3) (in particular (1') to (3')), since, in this case, the resultant lithium ion conductor has high lithium ion conductivity and high relative density.

In any of the aforementioned conditions (a) to (d), the LLZ ion conductive powder preferably contains Zr so as to satisfy the following mole ratio condition (4). When Zr is contained under the condition (4), an ion conductive powder having a garnet-type or garnet-like crystal structure can be readily produced.

(4)

$$0.33 \leq Zr/(La + A) \leq 1$$

A-5. Performance evaluation:

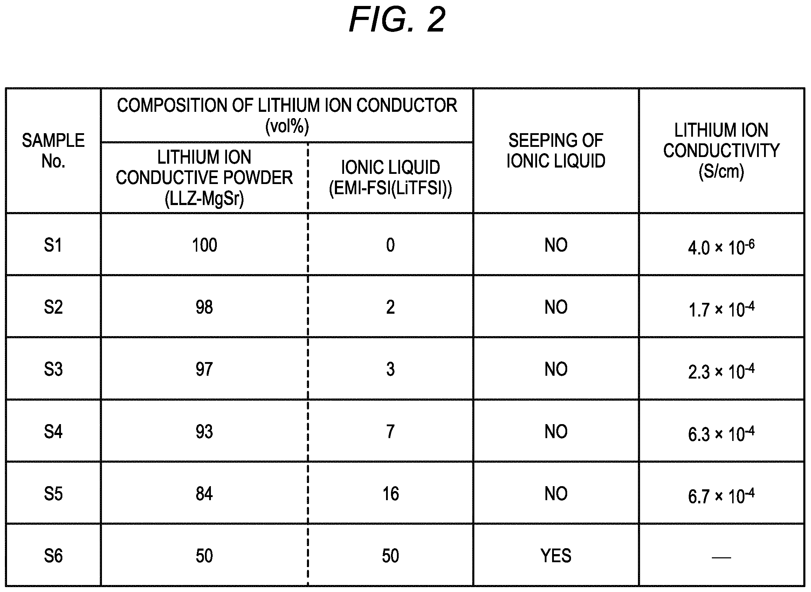

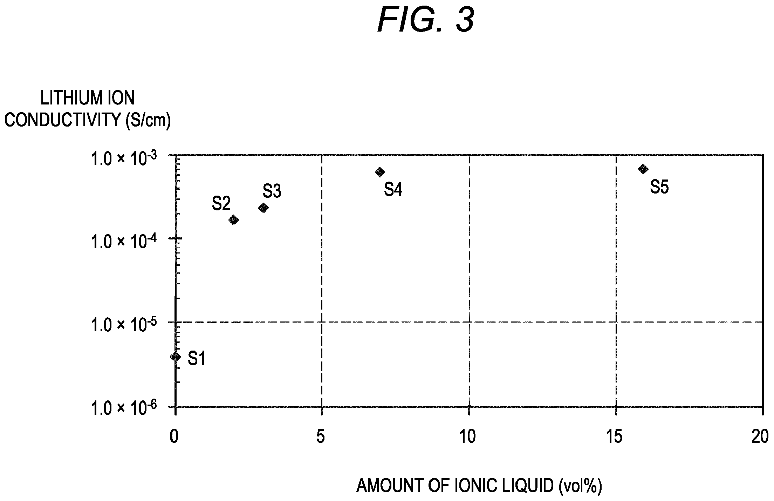

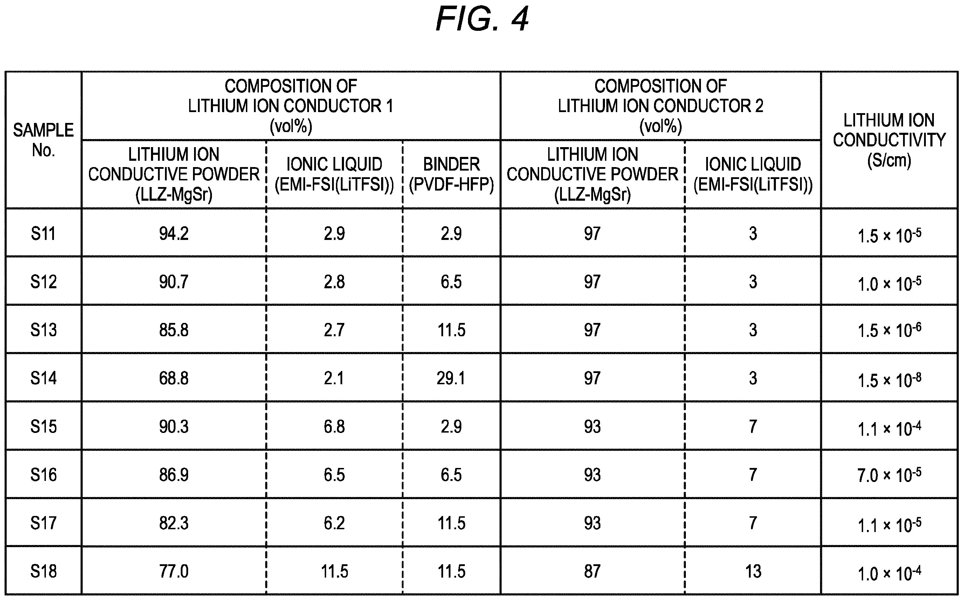

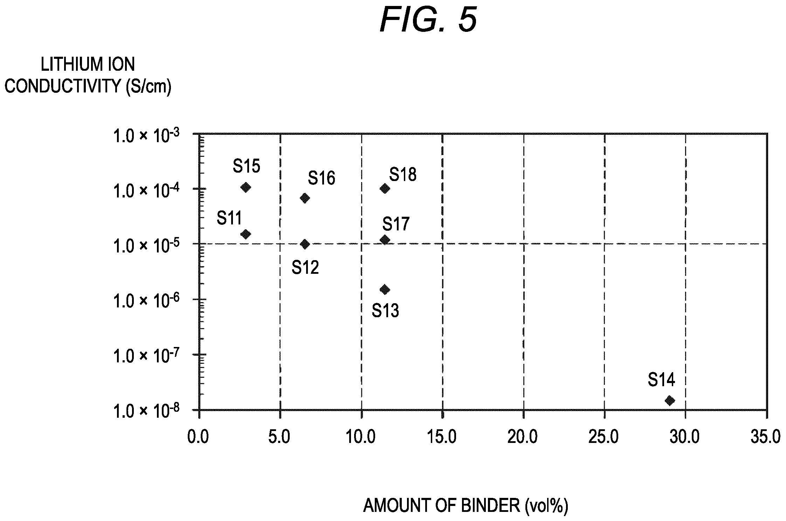

Lithium ion conductors 202, 204, and 206 contained in the respective layers (solid electrolyte layer 112, cathode 114, and anode 116) of a complete-solid battery 102 were evaluated for lithium ion conductivity. FIGS. 2 and 3 are a table and a graph showing the results of performance evaluation of a lithium ion conductor formed of an LLZ lithium ion conductive powder (specifically, the aforementioned LLZ-MgSr powder) and an ionic liquid (specifically, the aforementioned EMI-FSI containing Li-TFSI dissolved therein (hereinafter referred to as "EMI-FSI (LiTFSI)")) (hereinafter the performance evaluation will be referred to as "first performance evaluation"). FIGS. 4 and 5 are a table and a graph showing the results of performance evaluation of a lithium ion conductor formed of the same LLZ lithium ion conductive powder as described above, the same ionic liquid as described above, and a binder (specifically, the aforementioned PVDF-HFP) (hereinafter the performance evaluation will be referred to as "second performance evaluation").

As shown in FIGS. 2 and 3, six samples (S1 to S6) were used for the first performance evaluation. These samples have different compositions of lithium ion conductors; more specifically, different volume ratio (vol%) condition of the amounts of a LLZ lithium ion conductive powder and an ionic liquid. The lithium ion conductor of sample S1 is formed only of an LLZ lithium ion conductive powder and contains no ionic liquid. The points on a graph shown in FIG. 3 are marked with sample numbers shown in FIG. 2.

As shown in FIGS. 4 and 5, eight samples (S11 to S18) were used for the second performance evaluation. These samples have different compositions of lithium ion conductors; more specifically, different volume ratio (vol%) condition of the amounts of a LLZ lithium ion conductive powder, an ionic liquid, and a binder (see "Composition 1 of lithium ion conductor" in FIG. 4). As shown in "Composition 2 of lithium ion conductor" in FIG. 4, the volume ratio (vol%) condition of the amounts of a LLZ lithium ion conductive powder and an ionic liquid in samples S11 to S14 are the same as those in sample S3 used for the first performance evaluation. Similarly, the volume ratio (vol%) condition of the amounts of a LLZ lithium ion conductive powder and an ionic liquid in samples S15 to S17 are the same as those in sample S4 used for the first performance evaluation. The points on a graph shown in FIG. 5 are marked with sample numbers shown in FIG. 4.

The samples used for the first and second performance evaluations were prepared as follows. Methods for evaluation of the samples will be described below.

(First performance evaluation)

$Li_2CO_3$, MgO, $La(OH)_3$, $SrCO_3$, and $ZrO_2$ were weighed so as to achieve a composition of $Li_{6.95}Mg_{0.15}La_{2.75}Sr_{0.25}Zr_{2.0}O_{12}$ (LLZ-MgSr). In consideration of volatilization of Li during firing, $Li_2CO_3$ was further added so that the amount of elemental Li was in excess by about 15 mol%. These raw materials were added to a nylon pot together with zirconia balls, and the resultant mixture was pulverized by means of a ball mill in an organic solvent for 15 hours. Thereafter, the resultant slurry was dried and then calcined on an MgO plate at 1,100°C for 10 hours. A binder was added to the calcined powder, and the mixture was subjected to pulverization by means of a ball mill in an organic solvent for 15 hours. Thereafter, the resultant slurry was dried, and the dried material was added to a mold having a diameter of 12 mm. The material was press-molded so as to have a thickness of about 1.5 mm, and then the molded product was pressed at an isostatic pressure of 1.5 t/cm$^2$ by means of a cold isostatic pressing (CIP) machine, to thereby form a compact. The compact was covered with a calcination powder having the same composition as that of the compact and fired in a reducing atmosphere at 1,100°C for four hours, to thereby yield a sintered body. The sintered body was found to have a lithium ion conductivity of $1.0 \times 10^{-3}$ S/cm. The sintered body was pulverized in a glove box with an argon atmosphere, to thereby prepare an LLZ-MgSr powder.

EMI-FSI (manufactured by Wako Pure Chemical Industries, Ltd.) as an ionic liquid was mixed with Li-TFSI (manufactured by Kojundo Chemical Laboratory Co., Ltd.) as a lithium salt (0.8 mol/L), to thereby prepare EMI-FSI (LiTFSI); i.e., a lithium-salt-dissolved ionic liquid.

In an argon atmosphere, the above-prepared LLZ-MgSr powder and EMI-FSI (LiTFSI) (total: 0.5 g) were mixed by means of a mortar in predetermined volume ratios (different among samples), to thereby prepare a powder mixture of LLZ-MgSr and EMI-FSI (LiTFSI). As described above, this powder mixture was replaced with the LLZ-MgSr powder in sample S1.

In an argon atmosphere, the above-prepared powder mixture (only the LLZ-MgSr powder was used in sample S1, the same shall apply hereinafter) was added to an insulating tube having a diameter of 10 mm, and a pressure of 500 MPa was vertically applied to the tube for press molding, to thereby form a molded product (compact) of lithium ion conductor. The lithium ion conductor compact was screw-fixed with a torque of 8 N by means of a pressing jig, and the lithium ion conductivity of the compact was measured at room temperature (25°C).

(Second performance evaluation)

A powder mixture of LLZ-MgSr and EMI-FSI (LiTFSI) was prepared in the same manner as in the first performance evaluation. In this case, the proportions of LLZ-MgSr and EMI-FSI (LiTFSI) in samples S11 to S14 were the same as those in sample S3 used for the first performance evaluation, and the proportions of LLZ-Mg-Sr and EMI-FSI (LiTFSI) in samples S15 to S17 were the same as those in sample S4 used for the first performance evaluation. In sample S18, the proportions of LLZ-MgSr and EMI-FSI (LiTFSI) were adjusted as shown in FIG. 4.

In an argon atmosphere, the above-prepared powder mixture of LLZ-MgSr and EMI-FSI (LiTFSI) was mixed with a PVDF-HFP binder in an organic solvent by means of a mortar, and an aluminum foil (thickness: 20 μm) was coated with the resultant mixture by means of an applicator (clearance: 500 μm). The resultant coating was dried under reduced pressure at 70°C for one hour, to thereby form a sheet containing LLZ-MgSr and EMI-FSI (LiTFSI).

In an argon atmosphere, the above-prepared sheet was added to an insulating tube having a diameter of 10 mm, and a pressure of 500 MPa was vertically applied to the tube for press molding, to thereby form a compact of lithium ion conductor. The lithium ion conductor compact was screw-fixed with a torque of 8 N by means of a pressing jig, and the lithium ion conductivity of the compact was measured at room temperature (25°C).

(Results of first performance evaluation)

As shown in FIGS. 2 and 3, sample S1 formed only of the LLZ lithium ion conductive powder (LLZ-MgSr) exhibited a low lithium ion conductivity of $4.0 \times 10^{-6}$ S/cm. In contrast, samples S2 to S5, which contained both the LLZ lithium ion conductive powder and the ionic liquid (EMI-FSI (LiTFSI)), exhibited a lithium ion conductivity of $1.7 \times 10^{-4}$ S/cm or more, which was higher than the lithium ion conductivity of sample S1 formed only of the LLZ lithium ion conductive powder. Meanwhile, in the case of sample S6, which contained both the LLZ lithium ion conductive powder and the ionic liquid (but the amount of the ionic liquid is excessively large (in excess of 16 vol%)), seeping of the ionic liquid occurred during pressing before the evaluation, and thus the evaluation failed to be performed at a presumed ionic liquid proportion. These results indicated that the lithium ion conductor containing both the LLZ lithium ion conductive powder and the ionic liquid exhibits high lithium ion conductivity only by press molding without firing. The results also indicated that the amounts of the LLZ ion conductive powder and the ionic liquid preferably satisfy the following volume ratio (vol%) condition: the LLZ ion conductive powder : the ionic liquid = (100 - X) : X (wherein $0 < X \leq 16$) for achieving high lithium ion conductivity while preventing seeping of the ionic liquid (which is caused by an excessive increase in the amount of the ionic liquid) in the lithium ion conductor.

The XPS analysis of a cut surface of the lithium ion conductor of sample S3 showed neither La peak nor Zr peak. In general, XPS analysis provides data on the surface (to a depth of several nm) of an object. Thus, the results of the analysis indicated that particles of the LLZ ion conductive powder are covered with the ionic liquid in the lithium ion conductor.

(Results of second performance evaluation)

As shown in FIGS. 4 and 5, samples S11 to S14 have the same volume ratios of the LLZ ion conductive powder and the ionic liquid (97 vol% : 3 vol%) (see "Composition 2 of lithium ion conductor" in FIG. 4) but different amounts of the binder. Similarly, samples S15 to S17 have the same volume ratios of the LLZ ion conductive powder and the ionic liquid (93 vol% : 7 vol%) (see "Composition 2 of lithium ion conductor" in FIG. 4) but different amounts of the binder. Sample S18 has a binder content equal to that of sample S13 or S17, but has an ionic liquid content higher than that of sample S13 or S17.

As shown in FIGs. 4 and 5, an increase in the amount of the binder leads to a tendency of lithium ion conductivity to decrease in the lithium ion conductor. In the cases of samples S11 to S14, which have the same proportions of the LLZ ion conductive powder and the ionic liquid, the difference in lithium ion conductivity between sample S13 and sample S12 (i.e., a decrease in lithium ion conductivity from sample S12) is greater than the difference in lithium ion conductivity between sample S12 and sample S11 (i.e., a decrease in lithium ion conductivity from sample S11). Similarly, in the cases of samples S15 to S17, which have the same proportions of the LLZ ion conductive powder and the ionic liquid, the difference in lithium ion conductivity between sample S17 and sample S16 (i.e., a decrease in lithium ion conductivity from sample S16) is greater than the difference in lithium ion conductivity between sample S16 and sample S15 (i.e., a decrease in lithium ion conductivity from sample S15). Thus, a decrease in the lithium ion conductivity of the lithium ion conductor caused by an increase in the amount of the binder from 6.5 vol% to 11.5 vol% is greater than a decrease in the lithium ion conductivity of the lithium ion conductor caused by an increase in the amount of the binder from 2.9 vol% to 6.5 vol%. The results indicated that when the lithium ion conductor contains the binder, the sum of the amounts of the LLZ ion conductive powder and the ionic liquid and the amount of the binder in the lithium ion conductor preferably satisfy the following volume ratio (vol%) condition: (the LLZ ion conductive powder + the ionic liquid) : the binder = (100 - Y) : Y (wherein 0<Y≤6.5) for preventing a decrease in lithium ion conductivity caused by the presence of the binder.

As shown in FIGS. 4 and 5, in the cases of samples S13, S17, and S18, which have an approximately equal binder content within a range of 11.5 vol% or less (specifically, these samples have a binder content of 11.5 vol%), the lithium ion conductivity of sample S17 or S18 wherein the amount of the ionic liquid is 7 vol% or more (see "Composition 2 of lithium ion conductor" in FIG. 4) is greater than that of sample S13 wherein the amount of the ionic liquid is less than 7 vol%. As described above, the results of the first performance evaluation indicate that that the amounts of the LLZ ion conductive powder and the ionic liquid preferably satisfy the following volume ratio (vol%) condition: the LLZ ion conductive powder : the ionic liquid = (100 - X) : X (wherein O<X≤16). These results indicated that when the lithium ion conductor contains the binder, the amounts of the LLZ ion conductive powder and the ionic liquid preferably satisfy the following volume ratio (vol%) condition: the LLZ ion conductive powder : the ionic liquid = (100 - X) : X (wherein 7≤X≤16), and the sum of the amounts of the LLZ ion conductive powder and the ionic liquid and the amount of the binder in the lithium ion conductor preferably satisfy the following volume ratio (vol%) condition: (the LLZ ion conductive powder + the ionic liquid) : the binder = (100 - Y) : Y (wherein 0<Y≤11.5) for preventing a decrease in lithium ion conductivity caused by the presence of the binder. Sample S18 exhibits particularly high lithium ion conductivity. Thus, more preferably, the amounts of the LLZ ion conductive powder and the ionic liquid satisfy the following volume ratio (vol%) condition: the LLZ ion conductive powder : the ionic liquid = (100 - X) : X (wherein 13≤X≤16).

B. Modifications:

The technique disclosed in the present specification is not limited to the aforementioned embodiment, but may be modified into various other forms without departing from the gist thereof. For example, the technique may be modified as described below.

In the aforementioned embodiment, the configuration of the complete-solid battery 102 is a mere example, and may be modified into various forms. For example, in the aforementioned embodiment, the lithium ion conductor containing the LLZ lithium ion conductive powder and the ionic liquid having lithium ion conductivity is contained in all of the solid electrolyte layer 112, the cathode 114, and the anode 116. However, the lithium ion conductor may be contained in at least one of the solid electrolyte layer 112, the cathode 114, and the anode 116.

The technique disclosed in the present specification is not limited to the solid electrolyte layer or electrode forming the complete-solid battery 102, but can also be applied to a solid electrolyte layer or electrode forming another lithium battery (e.g., a lithium-air battery or a lithium flow battery).

DESCRIPTION OF REFERENCE NUMERALS

102: complete-solid lithium ion secondary battery; 110: battery body; 112: solid electrolyte layer; 114: cathode; 116: anode; 154: cathode-side collector member; 156: anode-side collector member; 202: lithium ion conductor; 204: lithium ion conductor; 206: lithium ion conductor; 214: cathode active material; and 216: anode active material

## Claims

1. An ion conductor comprising an ion conductive powder containing at least Li, La, Zr, and O and having a garnet-type structure or a garnet-like structure, wherein the ion conductor further comprises an ionic liquid having lithium ion conductivity, and exhibits a lithium ion conductivity of $1.0 \times 10^{-5}$ S/cm or more at 25°C.

2. An ion conductor according to claim 1, wherein the amounts of the ion conductive powder and the ionic liquid satisfy the following volume ratio (vol%) condition: the ion conductive powder : the ionic liquid = (100 - X) : X (wherein $0 < X \leq 16$).

3. An ion conductor according to claim 1 or 2, wherein the amount of the ionic liquid is 95% or more at a cut surface of the ion conductor as determined by XPS analysis.

4. An ion conductor according to any one of claims 1 to 3, which further comprises a binder, wherein the sum of the amounts of the ion conductive powder and the ionic liquid and the amount of the binder satisfy the following volume ratio (vol%) condition: (the ion conductive powder + the ionic liquid : the binder) = (100 - Y) : Y (wherein $0 < Y \leq 6.5$).

5. An ion conductor according to any one of claims 1 to 3, which further comprises a binder, wherein the amounts of the ion conductive powder and the ionic liquid satisfy the following volume ratio (vol%) condition: the ion conductive powder : the ionic liquid = (100 - X) : X (wherein $7 \leq X \leq 16$), and the sum of the amounts of the ion conductive powder and the ionic liquid and the amount of the binder satisfy the following volume ratio (vol%) condition: (the ion conductive powder + the ionic liquid) : the binder = (100 - Y) : Y (wherein $0 < Y \leq 11.5$).

6. A lithium battery comprising a solid electrolyte layer, a cathode, and an anode, wherein at least one of the solid electrolyte layer, the cathode, and the anode contains an ion conductor as recited in any one of claims 1 to 5.

# FIG. 1

## FIG. 2

| SAMPLE No. | COMPOSITION OF LITHIUM ION CONDUCTOR (vol%) | | SEEPING OF IONIC LIQUID | LITHIUM ION CONDUCTIVITY (S/cm) |
|---|---|---|---|---|
| | LITHIUM ION CONDUCTIVE POWDER (LLZ-MgSr) | IONIC LIQUID (EMI-FSI(LiTFSI)) | | |
| S1 | 100 | 0 | NO | $4.0 \times 10^{-6}$ |
| S2 | 98 | 2 | NO | $1.7 \times 10^{-4}$ |
| S3 | 97 | 3 | NO | $2.3 \times 10^{-4}$ |
| S4 | 93 | 7 | NO | $6.3 \times 10^{-4}$ |
| S5 | 84 | 16 | NO | $6.7 \times 10^{-4}$ |
| S6 | 50 | 50 | YES | — |

FIG. 3

## FIG. 4

| SAMPLE No. | COMPOSITION OF LITHIUM ION CONDUCTOR 1 (vol%) | | | COMPOSITION OF LITHIUM ION CONDUCTOR 2 (vol%) | | LITHIUM ION CONDUCTIVITY (S/cm) |
|---|---|---|---|---|---|---|
| | LITHIUM ION CONDUCTIVE POWDER (LLZ-MgSr) | IONIC LIQUID (EMI-FSI(LiTFSI)) | BINDER (PVDF-HFP) | LITHIUM ION CONDUCTIVE POWDER (LLZ-MgSr) | IONIC LIQUID (EMI-FSI(LiTFSI)) | |
| S11 | 94.2 | 2.9 | 2.9 | 97 | 3 | $1.5 \times 10^{-5}$ |
| S12 | 90.7 | 2.8 | 6.5 | 97 | 3 | $1.0 \times 10^{-5}$ |
| S13 | 85.8 | 2.7 | 11.5 | 97 | 3 | $1.5 \times 10^{-6}$ |
| S14 | 68.8 | 2.1 | 29.1 | 97 | 3 | $1.5 \times 10^{-8}$ |
| S15 | 90.3 | 6.8 | 2.9 | 93 | 7 | $1.1 \times 10^{-4}$ |
| S16 | 86.9 | 6.5 | 6.5 | 93 | 7 | $7.0 \times 10^{-5}$ |
| S17 | 82.3 | 6.2 | 11.5 | 93 | 7 | $1.1 \times 10^{-5}$ |
| S18 | 77.0 | 11.5 | 11.5 | 87 | 13 | $1.0 \times 10^{-4}$ |

EP 3 796 337 A1

# FIG. 5

LITHIUM ION
CONDUCTIVITY (S/cm)

AMOUNT OF BINDER (vol%)

EP 3 796 337 A1

## INTERNATIONAL SEARCH REPORT

International application No.

PCT/JP2019/018869

### A. CLASSIFICATION OF SUBJECT MATTER
Int.Cl.    H01B1/06(2006.01)i, H01M10/052(2010.01)i, H01M10/0562(2010.01)i,
           H01M10/0568(2010.01)i

According to International Patent Classification (IPC) or to both national classification and IPC

### B. FIELDS SEARCHED

Minimum documentation searched (classification system followed by classification symbols)
Int.Cl. H01B1/06, H01M10/052, H01M10/0562, H01M10/0568

Documentation searched other than minimum documentation to the extent that such documents are included in the fields searched
Published examined utility model applications of Japan    1922-1996
Published unexamined utility model applications of Japan  1971-2019
Registered utility model specifications of Japan          1996-2019
Published registered utility model applications of Japan  1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2016-219223 A (NGK SPARK PLUG CO., LTD.) 22 December 2016, paragraphs [0015]-[0062], fig. 1 (Family: none) | 1, 6<br>2-5 |
| A | WO 2017/018217 A1 (CENTRAL GLASS CO., LTD.) 02 February 2017, paragraphs [0019]-[0055], [0074] & JP 2017-33926 A & US 2018/0175446 A1, paragraphs [0029]-[0073], [0103] & CN 107848894 A | 2-5 |
| A | JP 2017-4910 A (HITACHI, LTD.) 05 January 2017, paragraphs [0014]-[0056], fig. 1-5 (Family: none) | 2-5 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 July 2019 (08.07.2019) | 16 July 2019 (16.07.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016040767 A